# EUROPÄISCHE PATENTSCHRIFT

(11) **EP 3 298 092 B1**
(45) Veröffentlichungstag und Bekanntmachung des Hinweises auf die Patenterteilung: **24.10.2018**
(21) Anmeldenummer: 16721384.2
(22) Anmeldetag: 27.04.2016
(51) Int. Cl.: C09D 133/08, C09D 133/12, C08F 220/18

(54) **POLYMERISATE FÜR SCHMUTZABWEISENDE BESCHICHTUNGEN**
POLYMERS FOR DIRT-REPELLENT COATINGS
POLYMÈRES POUR DES REVÊTEMENTS REPOUSSANT LES SALISSURES

(30) Priorität: 21.05.2015 DE 102015209381
(43) Veröffentlichungstag der Anmeldung: 28.03.2018
(73) Patentinhaber: Wacker Chemie AG, 81737 München (DE)
(72) Erfinder: HASHEMZADEH, Abdulmajid, 84489 Burghausen (DE); HOFFMANN, Armin, 84524 Neuötting (DE)
(74) Vertreter: Ege, Markus
(86) Internationale Anmeldenummer: PCT/EP2016/059349
(87) Internationale Veröffentlichungsnummer: WO 2016/184650

(56) Entgegenhaltungen:
- EP-A1- 2 832 754
- EP-A2- 2 010 467
- DE-A1- 19 818 394

## Beschreibung

Die Erfindung betrifft Polymerisate auf Basis von Acrylsäureestern in Form von wässrigen Dispersionen oder in Wasser redispergierbaren Pulvern, Verfahren zu deren Herstellung sowie wässrige Beschichtungsmittel enthaltend die vorgenannten Polymerisate und deren Verwendung zur Herstellung von schmutzabweisenden Beschichtungen.

Schmutzabweisende Beschichtungen dienen dazu, die damit beschichteten Substrate vor Verschmutzung zu schützen. Poröse oder saugfähige Substrate, wie Holz, Beton, Natur- oder Kunststein, haben eine besonders ausgeprägte Verschmutzungsneigung, vor allem bei Kontakt mit Flüssigkeiten, insbesondere mit farbigen Flüssigkeiten, wie Kaffee, Tee oder Ölen. Die Verschmutzung bzw. die Bildung von farbigen Flecken auf dem Substrat kann dabei durch Extraktion von farbigen Stoffen aus dem Substrat oder durch Eintrag von farbigen Stoffen in das Substrat erfolgen. Um solchen Problemen vorzubeugen, sind unterschiedliche schmutzabweisende Beschichtungen vorgeschlagen worden. So lehrt die EP-A 1 926 787 Beschichtungsmittel basierend auf Polymerlatexbindemitteln, die Phosphorsäureester als anionische Emulgatoren enthalten. Auch die WO-A 98/10026 lehrt hierfür anionisch stabilisierte Polymere von Styrol, Acrylsäureestern sowie ethylenisch ungesättigten Carbonsäuren. Die WO-A 2011/128232 empfiehlt zur Verbesserung der Verschmutzungsresistenz von zementären Beschichtungen, Trockenbaustoffe enthaltend redispergierbare Polymerpulver auf noch nicht vollständig abgebundene zementäre Untergründe aufzustreuen. EP 2 010 467 B1 offenbart Wasser basierende Besichtungen, enthaltend Polymerisate basierend auf C8-C12-Alkylacrylat Monomeree, Acrylnitril und gegebenenfalls weiteren Monomeren.

Alternativ ist auch vorgeschlagen worden, die Abwaschbarkeit von Verschmutzungen durch Modifizierung der Beschichtungen mit Additiven zu verbessern. Hierfür lehrt die DE-A 197 07 219 wässrige Beschichtungsmittel, die neben beliebigen filmbildenden organischen Polymeren niedermolekulare Organosiliciumverbindungen als wesentliche Komponente enthalten.

Auch schmutzabweisende, abwaschbare Farben sind vielfach beschrieben worden. So lehrt die EP-A1 0 614 955 Styrol-Acrylat-Copolymere als Additive für Farben. Die EP-A 1 732 997 empfiehlt zur Verbesserung des Pigmentbindevermögens und der Nassabriebsfestigkeit von pigmentären Beschichtungen den Zusatz von Polymeren, die auf bestimmten Mengen an sogenannten harten und weichen Monomeren sowie Ethylhexylacrylat und säuregruppenhaltigen Monomeren basieren.

Ein Problem besteht jedoch weiterhin darin, Beschichtungen bereitzustellen, die die Substrate bei Kontakt mit unterschiedlichsten Flüssigkeiten vor Verschmutzung schützen, beispielsweise bei Kontakt mit hydrophoben beziehungsweise hydrophilen Flüssigkeiten, wie Kaffee, Tee, Ketchup, Fetten oder Ölen, also insbesondere Stoffen aus dem Lebensmittelbereich. Diese Problemstellung ist besonders ausgeprägt im Falle von porösen oder saugfähigen Substraten oder bei Kontakt mit warmen oder gar heißen Flüssigkeiten.

Vor diesem Hintergrund bestand weiterhin die Aufgabe, Maßnahmen bereitzustellen, mit denen die vorgenannten Probleme betreffend die Verschmutzungsresistenz von beschichteten Substraten verbessert wird.

Die Aufgabe wurde überraschenderweise mit wässrigen Beschichtungsmitteln gelöst, die Polymerisate mit der erfindungsgemäßen Monomerzusammensetzung enthielten.

Gegenstand der Erfindung sind wässrige Dispersionen oder in Wasser redispergierbare Pulver von Polymerisaten auf Basis von
a) 2-Ethylhexylacrylat,
b) n-Butylacrylat,
c) einem oder mehreren Vinylaromaten oder C1-bis C4-Alkylmethacrylaten, deren Homopolymerisate eine Glasübergangstemperatur Tg von ≥ 50°C aufweisen,
d) gegebenenfalls einem oder mehreren ethylenisch ungesättigten, Säure-Gruppen tragenden Monomeren,
e) gegebenenfalls einem oder mehreren ethylenisch ungesättigten, Silan-Gruppen tragenden Monomeren und
f) gegebenenfalls einem oder mehreren weiteren, von den vorgenannten Monomeren verschiedenen ethylenisch ungesättigten Monomeren, mit der Maßgabe, dass die Monomere f) ausgewählt werden aus der Gruppe bestehend aus n-Hexylacrylat, n-Hexylmethacrylat, Monomeren mit Hydroxy- oder CO-Gruppen, N-methylol(meth)acrylamid, N-(Alkoxymethyl (meth)acrylamiden und mehrfach ethylenisch ungesättigten Comonomeren,
dadurch gekennzeichnet, dass die Polymerisate zu 60 bis 99 Gew.-% auf 2-Ethylhexylacrylat a) und zu 1 bis 40 Gew.-% auf n-Butylacrylat b) basieren,
je bezogen auf das Gesamtgewicht der Monomere Ethylhexylacrylat a) und n-Butylacrylat b).

Auf 2-Ethylhexylacrylat a) basieren die Polymerisate vorzugsweise zu 70 bis 96 Gew.-%, besonders bevorzugt 80 bis 93 Gew.-% und am meisten bevorzugt 85 bis 90 Gew.-%,
je bezogen auf das Gesamtgewicht der Monomere Ethylhexylacrylat a) und n-Butylacrylat b).

Die Polymerisate basieren zu 20 bis 60 Gew.-%, besonders bevorzugt 30 bis 50 Gew.-% und am meisten bevorzugt 35 bis 45 Gew.-% auf 2-Ethylhexylacrylat a),
je bezogen auf das Gesamtgewicht der Polymerisate.

Auf n-Butylacrylat b) basieren die Polymerisate vorzugsweise zu 4 bis 30 Gew.-%, besonders bevorzugt 7 bis 20 Gew.-% und am meisten bevorzugt 10 bis 15 Gew.-%,
je bezogen auf das Gesamtgewicht der Monomere Ethylhexylacrylat a) und n-Butylacrylat b).

Die Polymerisate basieren vorzugsweise zu 1 bis 20 Gew.-%, besonders bevorzugt 3 bis 15 Gew.-% und am meisten bevorzugt 4 bis 10 Gew.-% auf n-Butylacrylat b),
je bezogen auf das Gesamtgewicht der Polymerisate.

Das Gewichtsverhältnis von 2-Ethylhexylacrylat a) zu n-Butylacrylat b) beträgt vorzugsweise von 3 zu 1 bis 15 zu 1, besonders bevorzugt von 5 zu 1 bis 10 zu 1 und am meisten bevorzugt von 6 zu 1 bis 7 zu 1.

Monomere c) sind erfindungsgemäss Vinylaromaten und C₁- bis C₄-Alkylmethacrylate, deren Homopolymerisate eine Glasübergangstemperatur Tg von ≥ 50°C, vorzugsweise ≥ 80°C aufweisen.

Bevorzugte Vinylaromaten sind Styrol oder alpha-Methylstyrols sowie ihre kernsubstituierten Derivate. Bevorzugte Monomere c) sind Styrol, Methylmethacrylat, tert.-Butylmethacrylat, tert.-Butylacrylat, Laurylacrylat, Stearylacrylat. Styrol und Methylmethacrylat sind besonders bevorzugt.

Die Polymerisate basieren vorzugsweise zu 30 bis 70 Gew.-%, besonders bevorzugt 40 bis 60 Gew.-% und am meisten bevorzugt 45 bis 55 Gew.-% auf Monomeren c),
je bezogen auf das Gesamtgewicht der Polymerisate.

Die Monomerauswahl bzw. die Auswahl der Gewichtsanteile der Comonomere erfolgt dabei so, dass die vorgenannten Glasübergangstemperaturen Tg resultieren. Die Glasübergangstemperatur Tg der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min bestimmt werden. Als Glasübergangstemperatur ausgewertet wird die Temperatur am Mittelpunkt der Stufe des Wärmefluss-Diagramms der zweiten Aufheizkurve (Mittelpunkt = halbe Stufenhöhe). Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edi¬tion, J. Wiley & Sons, New York (1975) aufgeführt. Der Anteil der einzelnen Monomere, insbesondere die Anteile von 2-Ethylhexylacrylat und n-Butylacrylat, an den Polymerisaten kann mit analytischen Routinemethoden bestimmt werden, wie beispielsweise mittels NMR-Spektroskopie.

Bei den Monomeren d) kann es sich beispielsweise um SulfonsäureGruppen tragende ethylenisch ungesättigte Monomere oder vorzugsweise um Carbonsäure-Gruppen tragende ethylenisch ungesättigte Monomere handeln. Bevorzugt sind ethylenisch ungesättigte C₃- bis C₈-Carbonsäuren oder deren Anhydride, wie Acrylsäure, Methacrylsäure, Crotonsäure, Fumarsäure, Maleinsäure, Maleinsäureanhydrid, Itaconsäure, Itaconsäureanhydrid und Acrylamidoglykolsäure. Bevorzugt sind auch ethylenisch ungesättigte Alkyl- oder Arylsulfonsäuren, wie Vinylsulfonsäure, Methallylsulfonsäure, Vinylbenzolsulfonsäure, Acrylamidoethansulfonsäure, Acrylamido-2-methylpropansulfonsäure (AMPS), 2-Sulfoethylacrylat, 2-Sulfoethylmethacrylat, 3-Sulfopropylacrylat, 3-Sulfopropyl-methacrylat, insbesondere in Kombination mit ethylenisch ungesättigte Carbonsäuren. Die Monomere d) können auch in Form von Salzen, insbesondere (Erd)Alkali- oder AmmoniumSalzen, eingesetzt werden. Besonders bevorzugt sind Acrylsäure, Methacrylsäure, Itaconsäure, Maleinsäure und Acrylamido-2-methylpropansulfonsäure. Am meisten bevorzugt sind Acrylsäure und insbesondere Methacrylsäure.

Bevorzugte Monomere d), insbesondere Carbonsäure-Gruppen tragende Monomere d), haben pKs-Werte von vorzugsweise 3 bis 6 und besonders bevorzugt 4,1 bis 5.

Die Polymerisate basieren vorzugsweise zu 0,1 bis 10 Gew.-%, besonders bevorzugt 0,5 bis 6 Gew.-%, mehr bevorzugt 1 bis 5 Gew.-% und am meisten bevorzugt 2,5 bis 4,5 Gew.-% auf Monomeren d), je bezogen auf das Gesamtgewicht der Polymerisate.

Beispiele für ethylenisch ungesättigte, Silan-Gruppen tragende Mo-nomere e) sind Verbindungen der allgemeinen Formel R¹SiR²₀₋₂(OR³)₁₋₃, wobei R² ein C₁- bis C₃-Alkylrest, C₁- bis C₃-Alkoxyrest oder Halogen, beispielsweise Chlor oder Brom, ist, R die Bedeutung CH₂=CR⁴-(CH₂)₀₋₁ oder CH₂=CR⁴CO₂(CH₂)₁₋₃ mit R als Kohlenstoffrest mit 1 bis 10 C-Atomen hat, R³ ein unverzweigter oder verzweigter, gegebenenfalls substituierter Alkylrest mit 1 bis 12 C-Atomen, vorzugsweise 1 bis 3 C-Atomen, ist. Das Silicium-Atom Si ist hierbei bekanntermaßen vierwertig.

Bevorzugt sind γ-Acryl- bzw. γ-Methacryloxypropyltri(alkoxy)silane, α-Methacryloxymethyltri(alkoxy)silane, γ-Methacryloxypropylmethyl-di(alkoxy)silane, Vinylalkyldi(alkoxy)silane und Vinyltri(alkoxy)-silane, wobei als Alkoxygruppen beispielsweise Methoxy-, Ethoxy-, Isopropoxy-, Methoxyethylen-, Ethoxyethylen-, Methoxypropylenglykolether- bzw. Ethoxypropylenglykolether-Reste eingesetzt werden können. Besonders bevorzugte Monomere e) sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyl-tris-(1-methoxy)-isopropoxysilan, Vinyltributoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltris-(2-methoxyethoxy)silan, Allylvinyltrimethoxysilan, Allyltrimethoxysilan, Vinyldimethylmethoxysilan, Vinyldimethylethoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan und Vinyldimethoxylauryloxysilan.

Als ungesättigte Alkoxysilane werden am meisten bevorzugt Vinyltrimethoxysilan, Vinylmethyldimethoxysilan, Vinyltriethoxysilan, Vinyltriisopropoxysilan, Vinylmethyldiethoxysilan, Vinyltris-(1-methoxy)-isopropoxysilan, Methacryloxypropyl-tris(2-methoxyethoxy)-silan, 3-Methacryloxypropyltrimethoxysilan, 3-Methacryloxypropylmethyldimethoxysilan und Methacryloxymethyltrimethoxysilan. Vinylsilane, das heißt Vinyl-Gruppen enthaltende Silane, sind bevorzugt.

Die Polymerisate basieren vorzugsweise auf 0 bis 5 Gew.-%, besonders bevorzugt 0,1 bis 3 Gew.-% und am meisten bevorzugt 0,5 bis 1,5 Gew.-% an Monomeren e),
je bezogen auf das Gesamtgewicht der Polymerisate.

Bei den weiteren, von den vorgenannten Monomeren verschiedenen ethylenisch ungesättigten Monomeren f) handelt es sich um ein oder mehrere Monomere f1) ausgewählt aus der Gruppe umfassend n-Hexylacrylat oder n-Hexylmethacrylat.

Die Polymerisate basieren beispielsweise auf 0 bis 30 Gew.-%, vorzugsweise 1 bis 20 Gew.-%, besonders bevorzugt 5 bis 10 Gew.-% an Monomeren f1), je bezogen auf das Gesamtgewicht der Polymerisate. Auf Monomere f1) kann aber auch verzichtet werden.

Bei den weiteren, von den vorgenannten Monomeren verschiedenen ethylenisch ungesättigten Monomeren f) können alternativ auch ein oder mehrere Monomere f2) ausgewählt aus der Gruppe umfassend ethylenisch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid oder Acetylacetoxyethylacrylat oder -methacrylat; N-Methylol(meth)acrylamid oder oder N-(Alkoxymethyl)(meth)acrylamiden, wie N-(Isobutoxymethyl)-acrylamid (IBMA), N-(Isobutoxymethyl)methacrylamid (IBMMA), N-(n-Butoxymethyl)acrylamid (NBMA) oder N-(n-Butoxymethyl)methacrylamid (NBMMA); mehrfach ethylenisch ungesättigte Comonomere, beispielsweise Divinyladipat, Diallylmaleat, Allylmethacrylat, Triallylisocyanurat oder Triallylcyanurat.

Die Polymerisate basieren vorzugsweise zu 0,1 bis 10 Gew.-%, besonders bevorzugt 0,5 bis 5 Gew.-% auf Monomeren f2), je bezogen auf das Gesamtgewicht der Polymerisate. Am meisten bevorzugt werden keine Monomere f2), insbesondere keine Hydroxyalkyl(meth)acrylsäureester eingesetzt.

Die Polymerisate können auch auf Fluor substituierten ethylenisch ungesättigten Monomeren basieren; vorzugsweise basieren die Polymerisate aber nicht auf Fluor substituierten ethylenisch ungesättigten Monomeren.

Die Polymerisate haben Glasübergangstemperaturen Tg von vorzugsweise 10 bis 40°C und besonders bevorzugt von 15 bis 30°C.

Ein weiterer Gegenstand der vorliegenden Erfindung sind Verfahren zur Herstellung von Polymerisaten in Form von wässrigen Dispersionen oder in Wasser redispergierbaren Pulvern durch radikalisch initiierte Emulsionspolymerisation in wässrigem Medium von
a) 2-Ethylhexylacrylat,
b) n-Butylacrylat,
c) einem oder mehreren Vinylaromaten oder C1-bis C4-Alkylmethacrylaten, deren Homopolymerisate eine Glasübergangstemperatur Tg von ≥ 50°C aufweisen,
d) gegebenenfalls einem oder mehreren ethylenisch ungesättigten, Säure-Gruppen tragenden Monomeren,
e) gegebenenfalls einem oder mehreren ethylenisch ungesättigten, Silan-Gruppen tragenden Monomeren und
f) gegebenenfalls einem oder mehreren weiteren, von den vorgenannten Monomeren verschiedenen ethylenisch ungesättigten Monomeren, mit der Maßgabe, dass die Monomere f) ausgewählt werden aus der Gruppe bestehend aus n-Hexylacrylat, n-Hexylmethacrylat, Monomeren mit Hydroxy- oder CO-Gruppen, N-Methylol (meth)acrylamid, N-(Alkoxymethyl) (meth)acrylamiden und mehrfach ethylenisch ungesättigten Comonomeren, und gegebenenfalls anschließende Trocknung, dadurch gekennzeichnet, dass
   60 bis 99 Gew.-% 2-Ethylhexylacrylat a) und
   1 bis 40 Gew.-% n-Butylacrylat b) eingesetzt werden,
   je bezogen auf das Gesamtgewicht der Monomere Ethylhexylacrylat a) und n-Butylacrylat b) und 20 bis 60 Gew.-%, bezogen auf das Gesamtgewicht der Polymerisate, 2-Ethylhexylacrylat a) Einsatz finden.

Die Polymerisationstemperatur ist vorzugsweise zwischen 40°C und 100°C, besonders bevorzugt zwischen 60°C und 90°C. Bei der Copolymerisation wird im Allgemeinen bei Drücken zwischen 0,5 bar und 7 bar gearbeitet.

Die Polymerisation erfolgt vorzugsweise bei pH-Werten von 2 bis 7, besonders bevorzugt von 3 bis 5, und kann beispielsweise mit den üblichen organischen oder anorganischen Säuren, Basen oder Puffern, wie Phosphorsäure, Kohlensäure, Carbonsäuren oder Ammoniak oder deren Salze, eingestellt werden. Nach der Polymerisation wird vorzugsweise neutralisiert. Die Polymerdispersionen weisen pH-Werte auf von vorzugsweise 6 bis 10, besonders bevorzugt 6 bis 8 und am meisten besonders von 7. Dies ist vorteilhaft zur Lösung der erfindungsgemäßen Aufgabe.

Die Initiierung der Polymerisation kann beispielsweise mit den für die Emulsionspolymerisation gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0, 1 bis 5 Gew.-%, vorzugsweise 0,1 bis 1 Gew.-% und am meisten bevorzugt 0,1 bis 0,5 Gew.-%, jeweils bezogen auf das Gesamtgewicht der Monomere, eingesetzt.

Als Redox-Initiatoren werden vorzugsweise Kombinationen aus den genannten Initiatoren und Reduktionsmitteln verwendet. Geeignete Reduktionsmittel sind beispielsweise die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im Allgemeinen 0,015 bis 3 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,1 bis 1,0 Gew.-%, vorzugsweise 0,2 bis 0,6 Gew.-% und am meisten bevorzugt 0,3 bis 0,5 Gew.-%, bezogen auf die zu polymerisierenden Monomeren, eingesetzt. Die regelnden Substanzen können separat oder auch vorgemischt mit Reaktionskomponenten dosiert werden. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Im Allgemeinen wird in Gegenwart von Emulgatoren polymerisiert. Üblicherweise werden 0,1 bis 5 Gew.-%, vorzugsweise 0,2 bis 4 Gew.-% und am meisten bevorzugt 0,5 bis 3 Gew.-% Emulgatoren eingesetzt, bezogen auf das Gesamtgewicht der insgesamt eingesetzten Monomere. Geeignete Emulgatoren sind allgemein kationische Emulgatoren, nichtionische Emulgatoren und insbesondere anionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten. Besonders bevorzugt sind Alkylsulfate, insbesondere Laurylsulfate. Ein solcher Einsatz von Emulgatoren ist vorteilhaft zur Lösung der erfindungsgemäßen Aufgabe.

Nichtionische Emulgatoren werden vorzugsweise zu ≥ 3 Gew.-% und besonders bevorzugt ≥ 1 Gew.-% eingesetzt, bezogen auf das Gesamtgewicht der insgesamt eingesetzten Monomere. Am meisten bevorzugt werden keine nichtionischen Emulgatoren eingesetzt. Der Anteil der anionischen Emulgatoren beträgt vorzugsweise 50 bis 100 Gew.-% und besonders bevorzugt 70 bis 100 Gew.-%, je bezogen auf das Gesamtgewicht der insgesamt für die Polymerisation eingesetzten Emulgatoren. Am meisten bevorzugt werden als Emulgatoren ausschließlich anionische Emulgatoren eingesetzt.

Es kann auch in Gegenwart von 0 bis 10 Gew.-%, insbesondere 0,1 bis 7 Gew.-% an Schutzkolloiden, bezogen auf das Gesamtgewicht der insgesamt eingesetzten Monomere, polymerisiert werden, wie beispielsweise Polyvinylalkohole. Vorzugsweise wird in Abwesenheit von Schutzkolloiden polymerisiert.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen, wie Luft, Stickstoff oder Wasserdampf, entfernt werden.

Die so erhältlichen wässrigen Dispersionen haben einen Feststoffgehalt von vorzugsweise 20 bis 70 Gew.-% und besonders bevorzugt von 30 bis 60 Gew.-%.

Die wässrigen Dispersionen enthalten vorzugsweise keine Schutzkolloide.

Die Polymerisate in Form von wässrigen Dispersionen haben mittlere Partikeldurchmesser von vorzugsweise 40 und 200 nm und besonders bevorzugt 60 und 120 nm (Bestimmung mittels des Messgeräts Beckmann Coulter LS nach ISO 13320 (PIDS)).

Zur Herstellung von in Wasser redispergierbaren Polymerpulvern können die wässrigen Dispersionen, gegebenenfalls nach Zusatz von Schutzkolloiden als Trocknungshilfe, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung kann dabei in üblichen Sprühtrocknungsanlagen durchgeführt werden, wobei die Zerstäubung beispielsweise mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Die Gesamtmenge an Schutzkolloid vor dem Trocknungsvorgang beträgt vorzugsweise 3 bis 30 Gew.-%, besonders bevorzugt 5 bis 20 Gew.-%, bezogen auf den Polymeranteil. Geeignete Trocknungshilfen sind beispielsweise Polyvinylalkohole.

Bei der Verdüsung hat sich vielfach ein Gehalt von bis zu 3 Gew.-% Antischaummittel, bezogen auf das Basispolymerisat, als günstig erwiesen. Zur Erhöhung der Lagerfähigkeit durch Verbesserung der Verblockungsstabilität kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, insbesondere hydrophobe Kieselsäure, Kaoline, Silicate mit Teilchengrößen, vorzugsweise im Bereich von 10 nm bis 10 µm.

Die Viskosität der zu verdüsenden Speise wird über den Feststoffgehalt vorzugsweise so eingestellt, dass ein Wert von < 500 mPas (Brookfield-Viskosität bei 20 Umdrehungen und 23°C), besonders bevorzugt < 250 mPas, erhalten wird. Der Feststoffgehalt der zu verdüsenden Dispersion beträgt bevorzugt > 35%, besonders bevorzugt > 40%.

Zur Verbesserung der anwendungstechnischen Eigenschaften können weitere Zusätze zugegeben werden, beispielsweise bei der Verdüsung. Weitere, in bevorzugten Ausführungsformen enthaltene Bestandteile von redispergierbaren Polymerpulver-Zusammensetzungen sind Pigmente, Füllstoffe, Schaumstabilisatoren, Hydrophobierungsmittel.

Der mittlere Partikeldurchmesser der Polymerisate in Form von deren Pulver liegt vorzugsweise zwischen 20 und 200 Mikrometer, besonders bevorzugt zwischen 40 und 120 Mikrometer und am meisten bevorzugt zwischen 60 und 100 Mikrometer (Bestimmung nach Coulter).

Ein weiterer Gegenstand der Erfindung sind wässrige Beschichtungsmittel enthaltend ein oder mehrere erfindungsgemäße Polymerisate, Wasser und gegebenenfalls ein oder mehrere Additive.

Ein weiterer Gegenstand der Erfindung ist die Verwendung der erfindungsgemäßen Polymerisate zur Herstellung von schmutzabweisenden Beschichtungen.

Die wässrigen Beschichtungsmittel enthalten vorzugsweise 10 bis 100 Gew.-%, besonders bevorzugt 50 bis 100 Gew.-% und am meisten bevorzugt von 80 bis 100 Gew.-% an erfindungsgemäßen Polymerisaten, bezogen auf das Trockengewicht der wässrigen Beschichtungsmittel. Die erfindungsgemäßen Polymerisate können in Form von wässrigen Dispersionen oder in Wasser redispergierbaren Pulvern eingesetzt werden.

Die wässrigen Beschichtungsmittel enthalten vorzugsweise 30 bis 90 Gew.-% und besonders bevorzugt von 40 bis 85 Gew.-% Wasser, bezogen auf das Gesamtgewicht der wässrigen Beschichtungsmittel.

Beispiele für Additive sind Hydrophobierungsmittel, wie Wachse oder Silikone, Verdickungsmittel, Mattierungsmittel, Entschäumer, Rheologiemodifikatoren, Frostschutzmittel, Filmbildehilfsmittel, Netzmittel, zusätzliche Tenside, Biozide, Weichmacher oder von den erfindungsgemäßen Polymerisaten verschiedene polymere Bindemittel. Die wässrigen Beschichtungsmittel enthalten vorzugsweise 0 bis 20 Gew.-% und besonders bevorzugt 0,1 bis 10 Gew.-% Additive, bezogen auf das Trockengewicht der wässrigen Beschichtungsmittel. In einer bevorzugten Ausführungsform enthalten die wässrigen Beschichtungsmittel ≤ 2 Gew.-%, mehr bevorzugt ≤ 1 Gew.-% Weichmacher, je bezogen auf das Trockengewicht der wässrigen Beschichtungsmittel. Am meisten bevorzugt enthalten die wässrigen Beschichtungsmittel keine Weichmacher.

Des Weiteren können die wässrigen Beschichtungsmittel Pigmente, Farbstoffe oder Füllstoffe enthalten. Bevorzugt handelt es sich bei den wässrigen Beschichtungsmitteln um Klarlacke. Klarlacke enthalten vorzugsweise keine Pigmente oder Farbstoffe und besonders bevorzugt keine Füllstoffe.

Die wässrigen Beschichtungsmittel enthalten vorzugsweise keine Schutzkolloide.

Die Herstellung der wässrigen Beschichtungsmittel ist an keine besondere Vorgehensweise gebunden und kann auf herkömmliche Weise erfolgen, beispielsweise durch Mischen der Bestandteile der wässrigen Beschichtungsmittel in üblichen Mischern.

Die Applikation der wässrigen Beschichtungsmittel auf Substrate ist an kein besonderes Verfahren gebunden und kann beispielsweise durch Streichen, beispielsweise mittels Pinsel, Walzen oder Mops, Verspachteln, Druckverfahren, Sprühen oder Spritzen erfolgen.

Beispiele für Substrate sind Holz oder Holzwerkstoffe, beispielsweise Holzwandvertäfelungen oder Möbel, mineralische Untergründe, wie Beton, Estriche, Putz oder Gips, Keramik, Natur- oder Kunststein. Die Substrate können hierbei auch porös oder saugfähig sein.

Die wässrigen Beschichtungsmittel können auf unbehandelte oder vorbehandelte Substrate appliziert werden. Vorbehandelte Substrate sind beispielsweise bereits mit einem oder mehreren, von den erfindungsgemäßen wässrigen Beschichtungsmitteln verschiedenen Beschichtungsmitteln beschichtet, wie beispielsweise mit einer Farbe, einer Grundierung oder einem Primer. Die erfindungsgemäßen wässrigen Beschichtungsmittel können aber auch unmittelbar, d.h. als erstes Beschichtungsmittel auf die Substrate aufgebracht werden. Bevorzugt wird auf Beschichtungen basierend auf erfindungsgemäßen wässrigen Beschichtungsmitteln kein weiteres Beschichtungsmittel aufgebracht. Die erfindungsgemäße Beschichtung ist also vorzugsweise das Topcoating.

Die Beschichtungen basierend auf erfindungsgemäßen wässrigen Beschichtungsmitteln haben Schichtdicken von vorzugsweise 0,01 bis 50 µm.

Mit den erfindungsgemäßen Polymerdispersionen oder Polymerpulvern können Beschichtungen mit besonders vorteilhaften schmutzabweisenden oder verschmutzungsresistenten Eigenschaften erhalten werden, sogar bei Kontamination der Beschichtungen mit Flüssigkeiten vollkommen unterschiedlicher Polaritäten, wie beispielsweise Kaffee, Tee, Ketchup, Fette oder Öle aus dem Lebensmittelbereich oder auch Mineralöl oder wässrige Tinten. Es kann sogar eine Verschmutzungsresistenz bei Kontakt mit warmen oder heißen Flüssigkeiten erreicht werden. Etwaige durch Flüssigkeiten verursachte Verschmutzungen können vollständig oder zumindest teilweise abgewaschen werden. Die erfindungsgemäßen Beschichtungen zeigen auch eine vorteilhafte UV-Beständigkeit. Darüber hinaus verfügen die erfindungsgemäßen Beschichtungen auch über eine hohe Abrasionsbeständigkeit. Überraschenderweise konnten diese Effekte mit der erfindungsgemäßen Zusammensetzung der erfindungsgemäßen Polymerisate erzielt werden.

Die nachfolgenden Beispiele dienen zur weiteren Erläuterung der Erfindung, ohne diese in irgendeiner Weise einzuschränken.

### Beschreibung von Methoden zur Charakterisierung der Polymerdispersionen:

### Feststoffgehalt:

Bestimmung gemäß DIN EN ISO 3251 im Trockenschrank für 20 min bei 150°C.

### Brookfield-Viskosität:

Bestimmung mit einem Brookfieldviskosimeter, nach Temperierung auf 23°C, unter Einsatz von Spindel 1, bei 20 Umdrehungen pro Minute.

### Gewichtsmittlere Teilchengröße:

Bestimmung erfolgte mit dem Messgerät Beckmann Coulter LS nach ISO 13320 (PIDS).

### Beispiel 1 (Bsp.1):

In einem Reaktor mit 3 Liter Volumen wurden 1,104 kg deionisiertes Wasser, 1,23 g Kaliumperoxodisulfat, 12,3 g Natriumlaurylsulfat und 0,7 g Ammoniak (12,5%-ig in Wasser) in Stickstoffatmosphäre vorgelegt und unter Rühren auf 40°C erwärmt. Bei Erreichen von 40°C wurde folgende Monomermischung 1 in den Reaktor gegeben:

### Monomermischung 1:

| | |
|---|---|
| n-Butylacrylat | 9,8 g |
| Ethylhexylacrylat | 65,1 g |
| Methacrylsäure | 4,9 g |
| Methylmethacrylat | 42,3 g |
| Styrol | 40,7 g. |

Anschließend wurde die Temperatur auf 80°C erhöht. 30 Minuten nach dem Erreichen von 80°C wurde die folgende Monomermischung 2 während 150 Minuten und die folgende Kaliumperoxodisulfatlösung während 180 Minuten in den Reaktor zudosiert:

### Monomermischung 2:

| | |
|---|---|
| n-Butylacrylat | 39,5 g |
| Ethylhexylacrylat | 263,1 g |
| Methacrylsäure | 19,7 g |
| Methylmethacrylat | 171,0 g |
| Styrol | 164,5 g. |

### Kaliumperoxodisulfatlösung:

| | |
|---|---|
| Kaliumperoxodisulfat | 1,64 g |
| Wasser | 53,30 g. |

Nach Dosierende wurde für zwei Stunden bei 85°C gerührt. Der pH-Wert wurde während der Polymerisation im Bereich von 3 bis 4,5 gehalten. Anschließend wurde auf Raumtemperatur abgekühlt und der pH-Wert mit wässriger Ammoniaklösung auf 7 eingestellt.

Die so erhaltene Polymerdispersion hatte einen Feststoffgehalt von 41,5%, eine Brookfield-Viskosität von 219 mPa.s sowie eine gewichtsmittlere Teilchengröße von 69 nm.

### Beispiel 2 (Bsp.2):

Wie Beispiel 1 mit dem Unterschied, dass zusätzlich 1,0 Gew.-% Vinyltriethoxysilan eingesetzt wurde, bezogen auf das Gesamtgewicht der insgesamt eingesetzten Monomere, wobei das Vinyltriethoxysilan mengenanteilig je zur Hälfte der Monomermischung 1 und der Monomermischung 2 zugeschlagen wurde.

Die so erhaltene Polymerdispersion hatte einen Feststoffgehalt von 41,3%, eine Brookfield-Viskosität von 234 mPa.s sowie eine gewichtsmittlere Teilchengröße von 71 nm.

### Vergleichsbeispiel 3 (VBsp.3):

Wie Beispiel 1 mit dem Unterschied, dass folgende Monomermischungen 1 und 2 zum Einsatz kamen:

### Monomermischung 1:

| | |
|---|---|
| n-Butylacrylat | 37,5 g |
| Ethylhexylacrylat | 37,5 g |
| Methacrylsäure | 4,9 g |
| Methylmethacrylat | 42,3 g |
| Styrol | 40,7 g. |

### Monomermischung 2:

| | |
|---|---|
| n-Butylacrylat | 151,3 g |
| Ethylhexylacrylat | 151,3 g |
| Methacrylsäure | 19,7 g |
| Methylmethacrylat | 171,0 g |
| Styrol | 164,5 g. |

Die so erhaltene Polymerdispersion hatte einen Feststoffgehalt von 41,5%, eine Brookfield-Viskosität von 225 mPa.s sowie eine gewichtsmittlere Teilchengröße von 75 nm.

### Herstellung von Probekörpern:

Die jeweilige Polymerdispersion wurde durch Zugabe von Wasser auf einen Feststoffgehalt von 20% verdünnt und dann mit einem Pinsel auf einen Testkörper aufgetragen. Anschließendes Trocknen durch zweiwöchiges Lagern bei Normalbedingungen nach DIN50014 ergab die Probekörper.

### Austestung der Verschmutzungsneigung:

Auf die Probekörper wurden je drei Flecken Ketchup, Senf, Sonnenblumenöl, Balsamico und heißer Kaffee sowie heißer Schwarztee (90 bis 95°C) aufgetragen. Nach 24 Stunden Lagern unter Normalbedingungen nach DIN50014 wurde die so behandelte Oberfläche des jeweiligen Probekörpers mit Wasser abgespült und wiederum getrocknet. Der Verschmutzungsgrad der Oberfläche des getrockneten Probekörpers wurde visuell anhand des folgenden Schulnotensystems beurteilt:
1 = keinerlei Verschmutzungsrückstände erkennbar;
2 = im Falle von ein oder zwei Substanzen geringe Spuren von Verschmutzungsresten erkennbar;
3 = im Falle von drei oder vier Substanzen geringe Spuren von Verschmutzungsresten erkennbar;
4 = Verschmutzungsreste von allen sechs Substanzen auf der Oberfläche gut erkennbar;
5 = alle sechs aufgebrachten Substanzen sind sehr stark in den Probekörper eingedrungen; Verschmutzungsreste von allen sechs Substanzen zeichnen sich auf der Oberfläche des Probekörper sehr deutlich ab.

Die Ergebnisse der Austestung sind in Tabelle 1 zusammengefasst.

**Tabelle 1: Verschmutzungsneigung der Probekörper:**

| Probekörper behandelt mit: | Verschmutzungsmittel | | | | | |
|---|---|---|---|---|---|---|
| | Ketchup | heißer Kaffee | heißer Schwarztee | Öl | Balsamico | Senf |
| - | 4 | 4 | 4 | 5 | 5 | 5 |
| Dispersion VBsp.3 | 2 | 3 | 2 | 2 | 3 | 3 |
| Dispersion Bsp.1 | 1 | 2 | 1 | 2 | 2 | 3 |
| Dispersion Bsp. 2 | 1 | 1 | 1 | 2 | 2 | 2 |

Aus Tabelle 1 geht hervor, dass auf Grund der Zusammensetzung der erfindungsgemäßen Polymerisate die Verschmutzungsresistenz der Probekörper gegenüber hydrophilen Substanzen, wie Ketchup, Balsamico, Kaffee und Tee, verbessert wurde und zudem eine hervorragende Verschmutzungsresistenz gegenüber lipophilem Schmutz erreicht wurde. Insgesamt zeigen die erfindungsgemäß beschichteten Probekörper eine hervorragende und ausgewogene Verschmutzungsresistenz sowohl gegenüber hydrophilen wie auch gegenüber lipophilen Verunreinigungen.

### Austestung der Abriebsbeständigkeit:

Die Abriebsbeständigkeit des jeweiligen Probekörpers wurde nach EN 13892 Teil 5 ("Bestimmung des Widerstands gegen Rollbeanspruchung von Estrichen für Nutzschichten") bestimmt. Es wurden 10.000 Abriebszyklen durchgeführt. Die Ergebnisse sind in Tabelle 2 aufgelistet.

**Tabelle 2: Abriebsbeständigkeit der Probekörper:**

| | Oberfläche des Probekörpers behandelt mit: | | |
|---|---|---|---|
| | - | Dispersion Bsp.2 | Dispersion VBsp.3 |
| Abriebsmenge [g] | 14,4 | 2,5 | 5,5 |

Tabelle 2 belegt, dass durch die erfindungsgemäße Vorgehensweise der Abrieb verringert wurde.

## Patentansprüche

1. Wässrige Dispersionen oder in Wasser redispergierbare Pulver von Polymerisaten auf Basis von
a) 2-Ethylhexylacrylat,
b) n-Butylacrylat,
c) einem oder mehreren Vinylaromaten oder C₁- bis C₄-Alkylmethacrylaten , deren Homopolymerisate eine Glasübergangstemperatur Tg von ≥ 50°C aufweisen,
d) gegebenenfalls einem oder mehreren ethylenisch ungesättigten, Säure-Gruppen tragenden Monomeren,
e) gegebenenfalls einem oder mehreren ethylenisch ungesättigten, Silan-Gruppen tragenden Monomeren und
f) gegebenenfalls einem oder mehreren weiteren, von den vorgenannten Monomeren verschiedenen ethylenisch ungesättigten Monomeren, mit der Maßgabe, dass die Monomere f) ausgewählt werden aus der Gruppe bestehend aus n-Hexylacrylat, n-Hexylmethacrylat, Monomeren mit Hydroxy- oder CO-Gruppen, N-Methylol(meth)acrylamid, N-(Alkoxymethyl)(meth)-acrylamiden und mehrfach ethylenisch ungesättigten Comonomeren,
**dadurch gekennzeichnet, dass** die Polymerisate zu 60 bis 99 Gew.-% auf 2-Ethylhexylacrylat a) und
zu 1 bis 40 Gew.-% auf n-Butylacrylat b) basieren,
wobei sich die Angaben in Gew.-% je auf das Gesamtgewicht an Ethylhexylacrylat a) und n-Butylacrylat b) beziehen, und
die Polymerisate zu 20 bis 60 Gew.-%, bezogen auf das Gesamtgewicht der Polymerisate, auf 2-Ethylhexylacrylat a) basieren.

2. Wässrige Dispersionen oder in Wasser redispergierbare Pulver von Polymerisaten gemäß Anspruch 1, **dadurch gekennzeichnet, dass** die Polymerisate zu 70 bis 96 Gew.-% auf 2-Ethylhexylacrylat a) basieren,
bezogen auf das Gesamtgewicht an Ethylhexylacrylat a) und n-Butylacrylat b).

3. Wässrige Dispersionen oder in Wasser redispergierbare Pulver von Polymerisaten gemäß Anspruch 1 oder 2, **dadurch gekennzeichnet, dass** die Polymerisate zu 30 bis 50 Gew.-% auf 2-Ethylhexylacrylat a) basieren,
bezogen auf das Gesamtgewicht der Polymerisate.

4. Wässrige Dispersionen oder in Wasser redispergierbare Pulver von Polymerisaten gemäß Anspruch 1 bis 3, **dadurch gekennzeichnet, dass** die Polymerisate zu 1 bis 20 Gew.-% auf n-Butylacrylat b) basieren,
bezogen auf das Gesamtgewicht der Polymerisate.

5. Wässrige Dispersionen oder in Wasser redispergierbare Pulver von Polymerisaten gemäß Anspruch 1 bis 4, **dadurch gekennzeichnet, dass** ein oder mehrere Monomere c) ausgewählt werden aus der Gruppe umfassend Styrol, alpha-Methylstyrol, Methylmethacrylat, tert.-Butylmethacrylat, tert.-Butylacrylat, Laurylacrylat und Stearylacrylat .

6. Wässrige Dispersionen oder in Wasser redispergierbare Pulver von Polymerisaten gemäß Anspruch 1 bis 5, **dadurch gekennzeichnet, dass** ein oder mehrere Monomere d) eine Sulfonsäure-Gruppe und/oder eine Carbonsäure-Gruppen tragen.

7. Wässrige Dispersionen oder in Wasser redispergierbare Pulver von Polymerisaten gemäß Anspruch 1 bis 6, **dadurch gekennzeichnet, dass** ein oder mehrere ethylenisch ungesättigte, Silan-Gruppen tragende Monomere e) Verbindungen der allgemeinen Formel R¹SiR²₀₋₂(OR³)₁₋₃ sind, worin
R¹ die Bedeutung CH₂=CR⁴-(CH₂)₀₋₁ oder CH₂=CR⁴CO₂(CH₂)₁₋₃ mit R⁴ als Kohlenstoffrest mit 1 bis 10 C-Atomen hat,
R² ein C₁- bis C₃-Alkylrest, C₁- bis C₃-Alkoxyrest oder Halogen ist,
R³ ein unverzweigter oder verzweigter, gegebenenfalls substituierter Alkylrest mit 1 bis 12 C-Atomen ist.

8. Verfahren zur Herstellung von Polymerisaten in Form von wässrigen Dispersionen oder in Wasser redispergierbaren Pulvern mittels radikalisch initiierter Emulsionspolymerisation in wässrigem Medium von
a) 2-Ethylhexylacrylat,
b) n-Butylacrylat,
c) einem oder mehreren Vinylaromaten oder C₁- bis C₄-Alkylmethacrylaten , deren Homopolymerisate eine Glasübergangstemperatur Tg von ≥ 50°C aufweisen,
d) gegebenenfalls einem oder mehreren ethylenisch ungesättigten, Säure-Gruppen tragenden Monomeren,
e) gegebenenfalls einem oder mehreren ethylenisch ungesättigten, Silan-Gruppen tragenden Monomeren und
f) gegebenenfalls einem oder mehreren weiteren, von den vorgenannten Monomeren verschiedenen ethylenisch ungesättigten Monomeren, mit der Maßgabe, dass die Monomere f) ausgewählt werden aus der Gruppe bestehend aus n-Hexylacrylat, n-Hexylmethacrylat, Monomeren mit Hydroxy- oder CO-Gruppen, N-Methylol(meth)acrylamid, N-(Alkoxymethyl)-(meth)acrylamiden und mehrfach ethylenisch ungesättigten Comonomeren, und
gegebenenfalls anschließender Trocknung, **dadurch gekennzeichnet, dass**
60 bis 99 Gew.-% 2-Ethylhexylacrylat a) und
1 bis 40 Gew.-% n-Butylacrylat b) eingesetzt werden,
wobei sich die Angaben in Gew.-% je auf das Gesamtgewicht an Ethylhexylacrylat a) und n-Butylacrylat b) beziehen, und
20 bis 60 Gew.-%, bezogen auf das Gesamtgewicht der Polymerisate, 2-Ethylhexylacrylat a) Einsatz finden.

9. Wässrige Beschichtungsmittel enthaltend ein oder mehrere Polymerisate aus Anspruch 1 bis 7, Wasser und ein oder mehrere Additive.

10. Wässrige Dispersionen von Polymerisaten gemäß Anspruch 1 bis 7 oder wässrige Beschichtungsmittel gemäß Anspruch 9, **dadurch gekennzeichnet, dass** die wässrigen Dispersionen und die wässrigen Beschichtungsmittel keine Schutzkolloide enthalten.

11. Verwendung der Polymerisate aus Anspruch 1 bis 7 zur Herstellung von schmutzabweisenden Beschichtungen.

## Claims

1. Aqueous dispersion or water-redispersible powder of a polymer based on
a) 2-ethylhexyl acrylate,
b) n-butyl acrylate,
c) one or more vinylaromatics or C₁ to C₄ alkyl methacrylates whose homopolymers have a glass transition temperature Tg of ≥ 50°C,
d) optionally one or more ethylenically unsaturated monomers bearing acid groups,
e) optionally one or more ethylenically unsaturated monomers bearing silane groups, and
f) optionally one or more further ethylenically unsaturated monomers other than the aforementioned monomers, with the proviso that said monomers f) are selected from the group consisting of n-hexyl acrylate, n-hexyl methacrylate, monomers having hydroxyl or CO groups, N-methylol(meth)acrylamide, N-(alkoxymethyl)(meth)acrylamides and polyethylenically unsaturated comonomers,
**characterized in that** the polymer is 60 to 99 wt% based on 2-ethylhexyl acrylate a) and 1 to 40 wt% based on n-butyl acrylate b), wherein the particulars in wt% are each based on the combined weight of ethylhexyl acrylate a) and n-butyl acrylate b),
and the polymer is 20 to 60 wt%, based on the total weight of the polymer, based on ethylhexyl acrylate a).

2. Aqueous dispersion or water-redispersible powder of a polymer according to Claim 1, **characterized in that** the polymer is 70 to 96 wt% based on 2-ethylhexyl acrylate a),
based on the combined weight of ethylhexyl acrylate a) and n-butyl acrylate b).

3. Aqueous dispersion or water-redispersible powder of a polymer according to Claim 1 or 2, **characterized in that** the polymer is 30 to 50 wt% based on 2-ethylhexyl acrylate a), based on the total weight of polymer.

4. Aqueous dispersion or water-redispersible powder of a polymer according to Claim 1 or 2 or 3, **characterized in that** the polymer is 1 to 20 wt% based on n-butyl acrylate b),
based on the total weight of the polymer.

5. Aqueous dispersion or water-redispersible powder of a polymer according to Claim 1 or 2 or 3 or 4, **characterized in that** one or more monomers c) are selected from the group comprising styrene, alpha-methylstyrene, methyl methacrylate, tert-butyl methacrylate, tert-butyl acrylate, lauryl acrylate and stearyl acrylate.

6. Aqueous dispersion or water-redispersible powder of a polymer according to Claim 1 or 2 or 3 or 4 or 5, **characterized in that** one or more monomers d) bear a sulfonic acid group and/or a carboxylic acid group.

7. Aqueous dispersion or water-redispersible powder of a polymer according to Claim 1 or 2 or 3 or 4 or 5 or 6, **characterized in that** one or more ethylenically unsaturated monomers e), bearing silane groups, are compounds of the general formula R¹SiR²₀₋₂(OR³)_{1-3'} where R¹ represents CH₂=CR⁴-(CH₂)₀₋₁ or CH₂=CR⁴CO₂(CH₂)₁₋₃ where carbon moiety R⁴ has from 1 to 10 carbon atoms, R² represents a C₁ to C₃ alkyl moiety, C₁ to C₃ alkoxy moiety or halogen, R³ represents a branched or unbranched, optionally substituted alkyl moiety of 1 to 12 carbon atoms.

8. Method of preparing a polymer in the form of an aqueous dispersion or of a water-redispersible powder by free-radically initiated emulsion polymerization in an aqueous medium of
a) 2-ethylhexyl acrylate,
b) n-butyl acrylate,
c) one or more vinylaromatics or C₁ to C₄ alkyl methacrylates whose homopolymers have a glass transition temperature Tg of ≥ 50°C,
d) optionally one or more ethylenically unsaturated monomers bearing acid groups,
e) optionally one or more ethylenically unsaturated monomers bearing silane groups, and
f) optionally one or more further ethylenically unsaturated monomers other than the aforementioned monomers, with the proviso that said monomers f) are selected from the group consisting of n-hexyl acrylate, n-hexyl methacrylate, monomers having hydroxyl or CO groups, N-methylol(meth)acrylamide, N-(alkoxymethyl)(meth)acrylamides and polyethylenically unsaturated comonomers, and
optionally subsequent drying, **characterized in that**
60 to 99 wt% of 2-ethylhexyl acrylate a) and 1 to 40 wt% of n-butyl acrylate b) are used, wherein the particulars in wt% are each based on the combined weight of ethylhexyl acrylate a) and n-butyl acrylate b), and
20 to 60 wt%, based on the total weight of the polymer, of ethylhexyl acrylate a) is used.

9. Aqueous coating medium comprising one or more polymers from Claim 1 or 2 or 3 or 4 or 5 or 6 or 7, water and optionally one or more additives.

10. Aqueous dispersion of a polymer according to Claim 1 or 2 or 3 or 4 or 5 or 6 or 7 or Aqueous coating medium according to Claim 9, **characterized in that** Aqueous dispersion and aqueous coating medium do not contain any protective colloids.

11. Method of using the polymer from Claim 1 or 2 or 3 or 4 or 5 or 6 or 7 in the production of a dirt-repellent coating.

## Revendications

1. Dispersions aqueuses ou poudres redispersibles dans l'eau de polymères à base de :
a) acrylate de 2-éthylhexyle,
b) acrylate de n-butyle,
c) un ou plusieurs composés aromatiques de vinyle ou méthacrylates d'alkyle en C₁ à C₄, dont les homopolymères présentent une température de transition vitreuse Tg ≥ 50 °C,
d) éventuellement un ou plusieurs monomères éthyléniquement insaturés, portant des groupes acides,
e) éventuellement un ou plusieurs monomères éthyléniquement insaturés, portant des groupes silane, et
f) éventuellement un ou plusieurs monomères éthyléniquement insaturés supplémentaires, différents des monomères susmentionnés, à condition que les monomères f) soient choisis dans le groupe constitué par l'acrylate de n-hexyle, le méthacrylate de n-hexyle, les monomères contenant des groupes hydroxy ou CO, le N-méthylol(méth)acrylamide, les N-(alcoxyméthyl)(méth)acrylamides et les comonomères éthyléniquement insaturés à plusieurs reprises,
**caractérisées en ce que** les polymères sont à base de 60 à 99 % en poids d'acrylate de 2-éthylhexyle a) et
1 à 40 % en poids d'acrylate de n-butyle b),
les indications en % en poids se rapportant à chaque fois au poids total d'acrylate d'éthylhexyle a) et d'acrylate de n-butyle b), et
les polymères sont à base de 20 à 60 % en poids, par rapport au poids total des polymères, d'acrylate de 2-éthylhexyle a).

2. Dispersions aqueuses ou poudres redispersibles dans l'eau de polymères selon la revendication 1, **caractérisées en ce que** les polymères sont à base de 70 à 96 % en poids d'acrylate de 2-éthylhexyle a),
par rapport au poids total d'acrylate d'éthylhexyle a) et d'acrylate de n-butyle b).

3. Dispersions aqueuses ou poudres redispersibles dans l'eau de polymères selon la revendication 1 ou 2, **caractérisées en ce que** les polymères sont à base de 30 à 50 % en poids d'acrylate de 2-éthylhexyle a),
par rapport au poids total des polymères.

4. Dispersions aqueuses ou poudres redispersibles dans l'eau de polymères selon les revendications 1 à 3, **caractérisées en ce que** les polymères sont à base de 1 à 20 % en poids d'acrylate de n-butyle b),
par rapport au poids total des polymères.

5. Dispersions aqueuses ou poudres redispersibles dans l'eau de polymères selon les revendications 1 à 4, **caractérisées en ce qu'**un ou plusieurs monomères c) sont choisis dans le groupe comprenant le styrène, l'alpha-méthylstyrène, le méthacrylate de méthyle, le méthacrylate de tert.-butyle, l'acrylate de tert.-butyle, l'acrylate de lauryle et l'acrylate de stéaryle.

6. Dispersions aqueuses ou poudres redispersibles dans l'eau de polymères selon les revendications 1 à 5, **caractérisées en ce qu'**un ou plusieurs monomères d) portent un groupe acide sulfonique et/ou un groupe acide carboxylique.

7. Dispersions aqueuses ou poudres redispersibles dans l'eau de polymères selon les revendications 1 à 6, **caractérisées en ce qu'**un ou plusieurs monomères éthyléniquement insaturés, portant des groupes silane e) sont des composés de formule générale R¹SiR²₀₋₂(OR³)₁₋₃, dans laquelle
R¹ signifie CH₂=CR⁴-(CH₂)₀₋₁ ou CH₂=CR⁴CO₂(CH₂)₁₋₃ avec R⁴ un radical carboné de 1 à 10 atomes C,
R² signifie un radical alkyle en C₁ à C₃, un radical alcoxy en C₁ à C₃ ou un halogène,
R³ signifie un radical alkyle non ramifié ou ramifié, éventuellement substitué, de 1 à 12 atomes C.

8. Procédé de fabrication de polymères sous la forme de dispersions aqueuses ou de poudres redispersibles dans l'eau par polymérisation en émulsion initiée radicalairement dans un milieu aqueux de :
a) acrylate de 2-éthylhexyle,
b) acrylate de n-butyle,
c) un ou plusieurs composés aromatiques de vinyle ou méthacrylates d'alkyle en C₁ à C₄, dont les homopolymères présentent une température de transition vitreuse Tg ≥ 50 °C,
d) éventuellement un ou plusieurs monomères éthyléniquement insaturés, portant des groupes acides,
e) éventuellement un ou plusieurs monomères éthyléniquement insaturés, portant des groupes silane, et
f) éventuellement un ou plusieurs monomères éthyléniquement insaturés supplémentaires, différents des monomères susmentionnés, à condition que les monomères f) soient choisis dans le groupe constitué par l'acrylate de n-hexyle, le méthacrylate de n-hexyle, les monomères contenant des groupes hydroxy ou CO, le N-méthylol(méth)acrylamide, les N-(alcoxyméthyl)(méth)acrylamides et les comonomères éthyléniquement insaturés à plusieurs reprises, et
éventuellement séchage ultérieur, **caractérisé en ce que** 60 à 99 % en poids d'acrylate de 2-éthylhexyle a) et
1 à 40 % en poids d'acrylate de n-butyle b) sont utilisés, les indications en % en poids se rapportant à chaque fois au poids total d'acrylate d'éthylhexyle a) et d'acrylate de n-butyle b), et
20 à 60 % en poids, par rapport au poids total des polymères, d'acrylate de 2-éthylhexyle a) est utilisé.

9. Agents de revêtement aqueux, contenant un ou plusieurs polymères selon les revendications 1 à 7, de l'eau et un ou plusieurs additifs.

10. Dispersions aqueuses de polymères selon les revendications 1 à 7 ou agents de revêtement aqueux selon la revendication 9, **caractérisés en ce que** les dispersions aqueuses et les agents de revêtement aqueux ne contiennent pas de colloïdes protecteurs.

11. Utilisation des polymères selon les revendications 1 à 7 pour la fabrication de revêtements antisalissants.
